# EUROPÄISCHE PATENTSCHRIFT

(11) **EP 1 960 610 B1**
(45) Veröffentlichungstag und Bekanntmachung des Hinweises auf die Patenterteilung: **14.04.2010**
(21) Anmeldenummer: 05850175.0
(22) Anmeldetag: 16.12.2005
(51) Int. Cl.: E04C 2/16, C04B 18/26

(54) **VERFAHREN ZUR ERSTELLUNG EINER WAND EINES GEBÄUDES**
METHOD OF CONSTRUCTING A WALL OF A BUILDING
PROCEDE DE REALISATION D'UNE PAROI D'UN BATIMENT

(43) Veröffentlichungstag der Anmeldung: 27.08.2008
(73) Patentinhaber: ILA Bauen & Wohnen Ökologische Produkte und Bausysteme Vertriebsgesellschaft mbH, 74076 Heilbronn (DE)
(72) Erfinder: GROSCHUP, Herbert, 74172 Neckarsulm (DE)
(74) Vertreter: Ullrich & Naumann
(86) Internationale Anmeldenummer: PCT/DE2005/002284
(87) Internationale Veröffentlichungsnummer: WO 2007/068220

(56) Entgegenhaltungen:
- EP-A- 0 606 633
- EP-A- 0 838 557
- DE-A1- 10 230 963

## Beschreibung

Die Erfindung ist gebildet durch ein Verfahren zur Erstellung einer Wand eines Gebäudes, bei dem insbesondere aus nachwachsenden Rohstoffen, insbesondere aus Pflanzenfasern wie Holz, Bambus, Hanf oder dergl., Basiseinheiten erstellt werden, von denen eine Mehrzahl miteinander verklebt werden zur Bildung eines Basismoduls und eine Mehrzahl von Basismodulen hergestellt wird, bei dem zwei der Basismodule mit einem Überstand verklebt werden und an den sich bildenden Überstand wiederholt jeweils ein weiteres Basismodul zur Bildung eines Modul-Stranges angeklebt wird, und bei dem weiterhin aus dem Modul-Strang Gefach-Module ausgeschnitten und mit dem Ständerwerk der Wand verbunden werden.

Aus der EP 0 838 557 B1 ist ein Bausystem zur Erstellung von Gebäuden bekannt, bei dem eine Tragekonstruktion aus Holz erstellt wird, deren Zwischenräume mit Formsteinen ausgefacht werden, die aus Holzschnitzel oder Hanf als nachwachsende Rohstoffe sowie Zuschlagsstoffen gebildet sind. Dieses Bausystem bietet viele Vorteile, da aus ökologischen Materialien ein Gebäude erstellt werden kann, das ein günstiges Raumklima erzeugt. Allerdings ist mit der Erstellung eines derartiges Gebäudes ein Aufwand verbunden, der sich nicht oder nur geringfügig von dem Aufwand unterscheidet, der zur Erstellung eines konventionellen Gebäudes aus Mauerwerk erforderlich ist.

Der Erfindung liegt daher die Aufgabe zugrunde, ein Verfahren anzugeben, mit dem bei Vermeidung von großen Abfallmengen standardisiert die Wand eines Gebäudes erstellt werden kann.

Diese Aufgabe wird nach der Erfindung durch das eingangs genannte Verfähren gelöst.

Dieses Verfahren bietet den Vorteil, daß mit geringerem Arbeits- und Zeitaufwand und damit kostengünstiger die Ausfachung eines Ständerwerkes erfolgt, wobei besonders sparsam mit den vorhandenen Ressourcen umgegangen wird, wobei aus dem im Prinzip endlosen Modul-Strang die erforderlichen Gefach-Module ausgeschnitten werden, die individuell für die zu erstellende Wand benötigt werden; dabei bleiben anders als bei endlichen Platten insbesondere bei den üblicherweise rechtwinkelig geformten Gefach-Modulen keine Rest stehen, die entsorgt werden müssen, weil das nächste Gefach-Modul direkt an die Schnittkante des zuvor abgetrennten Fach-Moduls angesetzt werden kann. Die üblicherwiese unterschiedlichen Gefachegrößen können passgenau und materialoptimiert vom Modulstrang herausgeschnitten werden. Mit diesem Verfahren ist es möglich, ein massives geschoßhohes Gefach-Modul für ein Ständerwerk zu erstellen, das zuvor durch Verwendung von Formsteinen aus nachwachsenden Rohstoffen ausgemauert werden mußte.

Im Rahmen der Erfindung bevorzugt ist es, wenn die Basismodule in einem ersten Verlegemuster und in einem zweiten Verlegemuster hergestellt und in dem Modul-Strang alternierend angeordnet werden. Durch diesen Verfahrensschritt wird eine höhere Belastbarkeit des Gefach-Moduls mit sehr einfachen Maßnahmen erreicht, wobei durch die ggfs aus einer Vielzahl möglicher Verlegemuster ausgewählten unterschiedlichen ersten und zweiten Verlegemuster in sehr einfacher Weise auch die korrekte Bildung des endlosen Modul-Stranges optisch kontrolliert werden kann.

Besonders bevorzugt ist es im Rahmen der Erfindung, daß die Basiseinheiten an den Stoßfugen verklebt werden mit einem langsam aushärtenden Kleber, und daß die so gebildeten Basismodule nach dem Kleben zum Aushärten abgelagert werden, wobei günstigerweise die Ablagerungszeit so bemessen ist, daß die Basismodule ihr Schwindeverhalten verlieren, so daß durch diese zusätzlichen Verfahrensschritte die Basismodule den gewünschten Trocknungsgrad erreichen und Maßänderungen der Basismodule nicht mehr erfolgen. Die Basismodule sind im Ergebnis formstabil und stehen einem schnellen Produktions- und Verarbeitungsprozeß zur Verfügung. Da weiterhin die Ablagerungszeit nach dem Schwindeverhalten bemessen ist, kann ein langsam erhärtender Kleber, beispielsweise Zementkleber verwendet werden, so daß die Verwendung teurer schnellhärtender chemischer Kleber nicht erforderlich ist.

In einem weiteren Verfahrensschritt ist allerdings die Verwendung schnellhärtender Kleber erwünscht, nämlich wenn für die Herstellung des Modul-Stranges ein schnell härtender Kleber verwendet wird, der innerhalb der Transportzeit des Modul-Stranges auf ein Transportband von der Klebestation zu der Schneidestation aushärtet, so daß nach dem Zusammenfügen der Basismodule zu dem Modul-Strang ohne eine weitere Unterbrechung die fortgesetzte Verarbeitung des Modul-Stranges erfolgen kann. Die höheren Kosten für einen schnellhärtenden Kleber fallen dabei nicht stark ins Gewicht, da die erforderlichen Mengen gering sind.

Vorteilhaft ist es gleichfalls, wenn neben dem Transportband ein Montageband angeordnet ist, auf dem ein Rahmen, insbesondere aus Holzwerkstoffen und/oder Holz als das Ständerwerk für die Wand gefördert wird, wenn mittels einer Greifvorrichtung das Gefach-Modul von dem Transportband zu dem Montageband überführt wird, und wenn auf dem Montageband das Gefach-Modul mit dem Rahmen verbunden wird. Damit ist eine industrielle Fertigung der Wand erreicht, die als Fertigbauteil zu der Baustelle des zu errichtenden Gebäudes transportiert werden kann, wobei der besondere Vorteil darin liegt, daß diese Wand aus nachwachsenden Rohstoffen gebildet ist, also auch bei derartigen Baustoffen bei großen Bauteilen eine kostengünstige Vorfertigung möglich ist. Ein weiterer Vorteil im Vergleich zur Rahmenbauweise mit Dämmfüllung ist hier ein massiver Wandkern, der auch die sonst erforderliche Installationsebene erübrigt.

Dabei besteht zusätzlich die Möglichkeit, daß nach der Herstellung des Modul-Stranges auf diesem als erste Schicht oder als Träger eine zweite Schicht zur Veränderung der mechanischen und/oder thermischen Eigenschaften des Modul-Gefachs aufgebracht wird. Die zweite Schicht kann also dazu benutzt werden, die Festigkeit des Modul-Gefachs zu erhöhen oder eine bessere Wärme- oder Schalldämmung zu erreichen. Es ist natürlich weiterhin möglich, eine beliebige Anzahl von Schichten aufeinander zu kleben und dadurch sowohl die Wandstärken als auch die Beschaffenheit für den Anwendungsfall zu optimieren.

Als besonders vorteilhaft hat es sich gezeigt, wenn das Modul-Gefach mit einem Fräskopf ausschnitten wird, der eine seitliche Profilierung bewirkt, insbesondere wenn in dem Ständerwerk eine komplementäre Profilierung als Z-Profil oder T-Profil ausgebildet und eine paßgenaue Verbindung zwischen dem Ständerwerk und dem Modul-Gefach hergestellt wird, da so eine paßgenaue Verbindung mittels eines Formschlusses erreicht ist, der Wärmebrücken oder Spalte als Wärmelecks verhindert.

Selbstverständlich besteht im Rahmen der Erfindung auch die Möglichkeit, daß vor die aus dem Ständerwerk und dem Modul-Gefach gebildete Wand eine zweite Schale vorgesetzt wird, die einer weiteren Modifikation der mechanischen oder thermischen Eigenschaften dient oder zur Modifizierung des optischen Erscheinungsbildes geeignet ist.

Die mit dem erfindungsgemäßen Verfahren verbundenen Vorteile sind dann besonders ausgeprägt, wenn die Basiseinheiten möglichst groß gewählt sind, so daß gemäß der Erfindung die Basiseinheiten großflächig in einem Format bis zu 50 cm x 200 cm bei einer Dicke bis zu 5 cm hergestellt werden, wobei die maximalen möglichen Abmessungen durch das Schwindeverhalten des verwendeten Ausgangsmaterial bestimmt wird, also größere Abmessungen wegen des Schwindeverhaltens des Ausgangsmaterials nicht empfehlenswert sind, so daß die Größe der Basiseinheiten dadurch begrenzt wird, während prizipiell für die Bildung des Modul-Stranges keine vorgegebenen Begrenzungen beachtet werden müssen.

Im folgenden wird die Erfindung an einem in der Zeichnung dargestellten Ausführungsbeispiel näher erläutert; es zeigen:
- Fig. 1: eine perspektivische Darstellung einer Basiseinheit,
- Fig. 2: eine perspektivische Darstellung eines Basismoduls, zusammengesetzt aus mehreren Basiseinheiten,

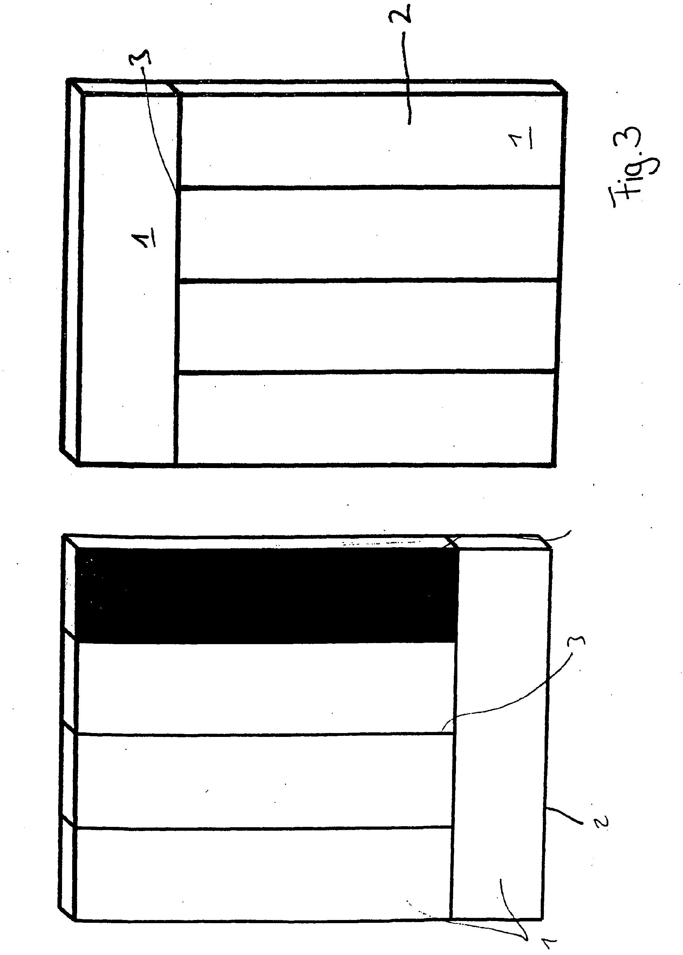

- Fig. 3: eine Draufsicht auf zwei in dem ersten Verlegemuster und dem zweiten Verlegemuster hergestellten, aus den Basiseinheiten gebildeten Basismodule,

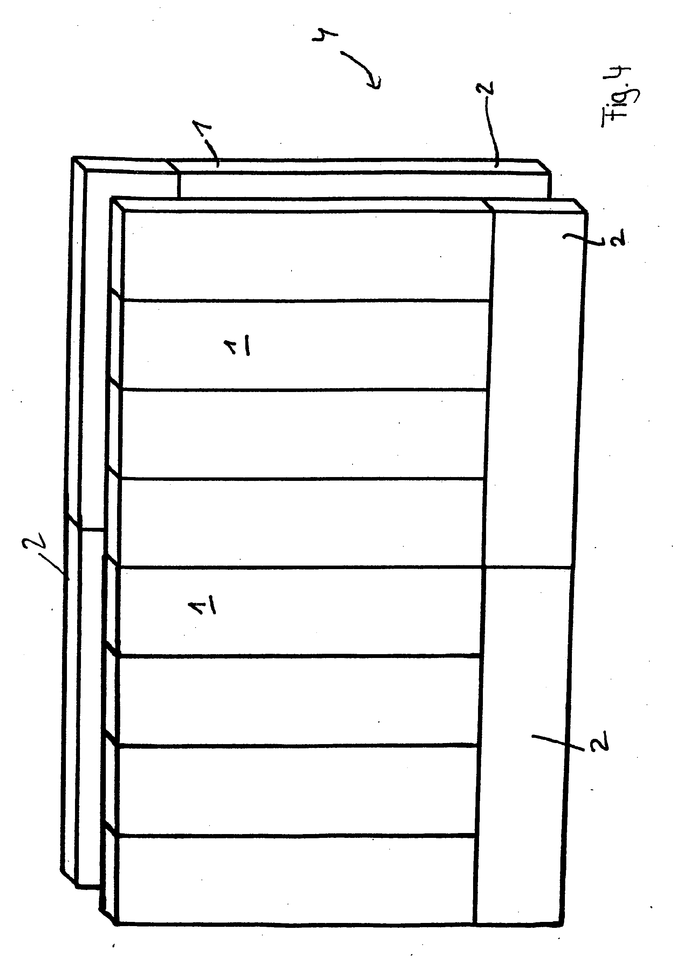

- Fig. 4: eine schematische, perspektivische Darstellung der Sicht auf das Ende des aus einer Mehrzahl von Basismodulen mit einem Überstand gebildeten Modul-Stranges,

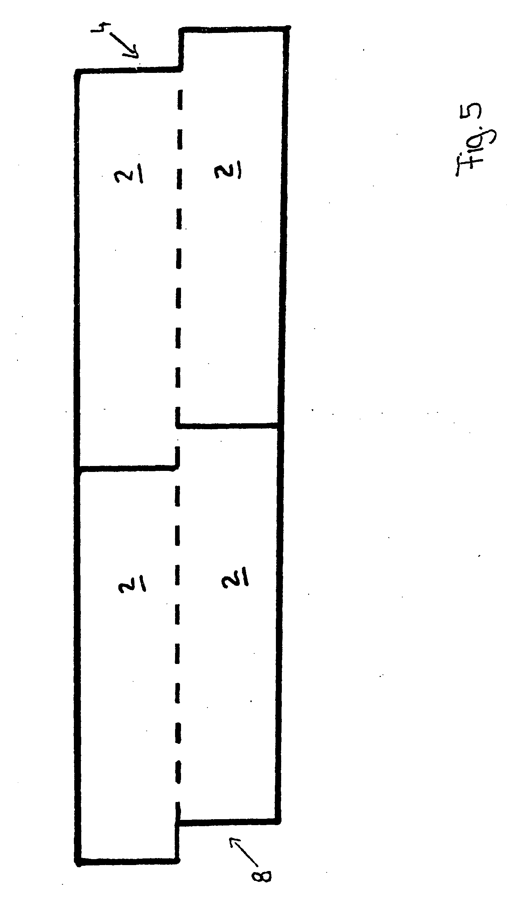

- Fig. 5: eine Draufsicht des Modul-Stranges, und

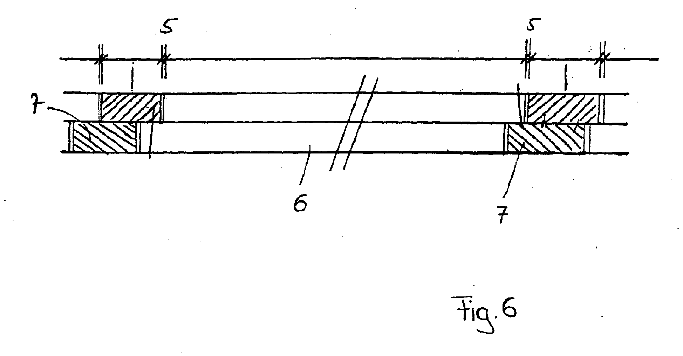

- Fig. 6: des aus dem Modul-Strang ausgeschnittenen Gefach-Moduls in dem Ständerwerk der Wand.

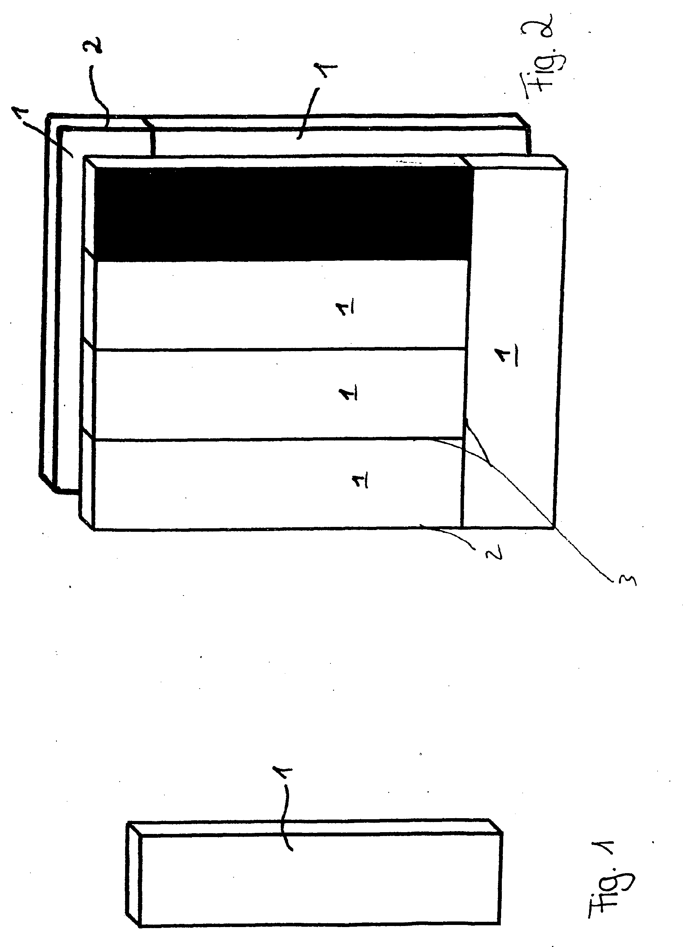

Zur Durchführung des erfindungsgemäßen Verfahrens werden aus nachwachsenden Rohstoffen, insbesondere aus Pflanzenfasern wie Holz, Bambus, Hanf oder dergleichen, denen gegebenenfalls noch Zuschlagsstoffe wie Kalk oder dergleichen zugeordnet werden, Basiseinheiten 1 erstellt, die ein Format gemäß einem bevorzugten Ausführungsbeispiel von 50 cm x 200 cm x 5 cm haben, wobei mehrere Basiseinheiten 1 zu einem Basismodul 2 zusammengefügt werden durch Verkleben der Stoßfugen 3 mit einem langsam aushärtenden Kleber. Figur 1 läßt dabei erkennen, daß die Basismodule 2 in zwei unterschiedlichen, nämlich einem ersten Verlegemuster und einem zweiten Verlegemuster hergestellt werden, die in dem gezeigten Ausführungsbeispiel sich lediglich durch eine Invertierung der Anordnung der Basiseinheiten 1 in Längsrichtung des Basismoduls 2 unterscheiden. Diese Basismodule 2 werden nach dem Kleben zum Aushärten abgelagert, wobei die Ablagerungszeit so bemessen ist, daß die Basismodule 2 ihr Schwindeverhalten verlieren, also formstabil sind und eine weitere Verarbeitung nicht durch eine Änderung der Abmessungen der Basismodule 2 beeinträchtigt wird. Nach der Ablagerungszeit werden die Basismodule 2 genutzt, um einen Modul-Strang 4 herzustellen, bei dem zwei der Basismodule 2 mit einem Überstand 8 verklebt werden und an den Überstand 8 jeweils ein weiteres Basismodul 2 zur Bildung des prinzipiell endlosen Modul-Stranges 4 angeklebt wird. Damit ist die Möglichkeit geschaffen, einen endlosen Modul-Strang 4 bereitzustellen, der auf einem Transportband von der Klebestation zu einer Schneidestation geführt wird und während der Transportzeit aushärtet. Dabei besteht auch die Möglichkeit stets zunächst zwei Basismodule 2 miteinander mit dem Überstand so zu verkleben, dass die Stoßfugen 3 nicht aufeinander liegen und den Modul-Strang 4 durch zwei paarweise zusammen gefasste Basismodule 2 zu verlängern. Diese Basismodul-Paare sind wesentlich formstabiler und daher auch leichter zu verarbeiten. In der Schneidestation erfolgt das Ausschneiden von Gefach-Modulen 6 mit einem Fräskopf, der eine seitliche Profilierung z.B. als Z-Profil oder T-Profil bewirkt, die an eine dem Ständerwerk 7 zugeordnete komplementäre Profilierung angepaßt ist und eine paßgenaue Verbindung zwischen dem Ständerwerk 7 und dem Gefach-Modul 6 ermöglicht. Diese paßgenaue Verbindung wird nach dem Ausschneiden des Gefach-Moduls 6 hergestellt, in dem dieses mittels einer Greifvorrichtung von dem Transportband zu einem nebem dem Transportband angeordneten Montageband überführt und auf dem Montageband mit dem Rahmen des Ständerwerks 7 verbunden wird.

Nach der so industriell erfolgten Fertigung der Wand ist es möglich, diese zu der Baustelle des zu erstellenden Gebäudes zu verbringen und dort mit weiteren Wänden zu verbinden. Es besteht selbstverständlich auch die Möglichkeit, daß vor die aus dem Ständerwerk 7 und dem Gefach-Modul 6 gebildeten Wand eine zweite Schale vorgesetzt, z.B. vorgemauert, vorgenagelt oder vorgeklebt wird bzw. zur Veränderung der mechanischen und/oder thermischen Eigenschaften der Wand eine zusätzliche Platte beispielsweise zur Wärme- oder Schalldämmung positioniert wird.

Zu beachten ist, dass der Modul-Strang 4 als eine erste Schicht als Träger für eine zweite Schicht genutzt werden kann, wobei natürlich eine unterschiedliche Materialwahl erfolgen kann.

## Patentansprüche

1. Verfahren zur Erstellung einer Wand eines Gebäudes, bei dem aus nachwachsenden Rohstoffen, insbesondere aus Pflanzenfasern wie Holz, Bambus, Hanf oder dergl., Basiseinheiten (1) erstellt werden, von denen eine Mehrzahl miteinander verklebt werden zur Bildung eines Basismoduls (2) und eine Mehrzahl von Basismodulen (2) hergestellt wird, bei dem zwei der Basismodule (2) mit einem Überstand (8) verklebt werden und an den sich bildenden Überstand (8) wiederholt jeweils ein weiteres Basismodul (2) zur Bildung eines Modul-Stranges (4) angeklebt wird, **dadurch gekennzeichnet, dass** weiterhin aus dem Modul-Strang (4) Gefach-Module (6) ausgeschnitten und mit dem Ständerwerk (7) der Wand verbunden werden.

2. Verfahren nach Anspruch 1, **dadurch gekennzeichnet, daß** die Basismodule (2) in einem ersten Verlegemuster und in einem zweiten Verlegemuster hergestellt und in dem Modul-Strang (4) alternierend angeordnet werden.

3. Verfahren nach Anspruch 1 oder 2, **dadurch gekennzeichnet, daß** die Basiseinheiten (1) an den Stoßfugen (3) verklebt werden mit einem langsam aushärtenden Kleber, und daß die so gebildeten Basismodule (2) nach dem Kleben zum Aushärten abgelagert werden.

4. Verfahren nach Anspruch 3, **dadurch gekennzeichnet, daß** die Ablagerungszeit so bemessen wird, daß die Basismodule (2) ihr Schwindeverhalten verlieren.

5. Verfahren nach einem der Ansprüche 1 bis 4, **dadurch gekennzeichnet, daß** für die Herstellung des Modul-Stranges (4) ein schnell härtender Kleber verwendet wird, der innerhalb der Transportzeit des Modul-Stranges (4) auf einem Transportband von der Klebestation zu der Schneidestation aushärtet.

6. Verfahren nach Anspruch 5, **dadurch gekennzeichnet, daß** neben dem Transportband ein Montageband angeordnet ist, auf dem ein Rahmen, insbesondere aus Holzwerkstoffen und/oder Holz als das Ständerwerk (7) für die Wand gefördert wird, daß mittels einer Greifvorrichtung das Gefach-Modul (6) von dem Transportband zu dem Montageband überführt wird, und daß auf dem Montageband das Gefach-Modul (6) mit dem Rahmen verbunden wird.

7. Verfahren nach einem der Ansprüche 1 bis 6, **dadurch gekennzeichnet, daß** nach der Herstellung des Modul-Stranges (4) auf diesem als erste Schicht oder als Träger eine zweite Schicht zur Veränderung der mechanischen und/oder thermischen Eigenschaften des Gefachs-Modul (6) aufgebracht wird.

8. Verfahren nach einem der Ansprüche 1 bis 7, **dadurch gekennzeichnet, daß** das Gefach-Modul (6) mit einem Fräskopf ausgeschnitten wird, der eine seitliche Profilierung bewirkt.

9. Verfahren nach Anspruch 8, **dadurch gekennzeichnet, daß** in dem Ständerwerk (7) eine komplementäre Profilierung ausgebildet und eine paßgenaue Verbindung zwischen dem Ständerwerk (7) und dem Modul-Gefach (6) hergestellt wird.

10. Verfahren nach einem der Ansprüche 1 bis 9, **dadurch gekennzeichnet, daß** vor die aus dem Ständerwerk (7) und dem Gefach-Modul (6) gebildete Wand eine zweite Schale vorgesetzt wird.

11. Verfahren nach einem der Ansprüche 1 bis 10, **dadurch** gekenntzeichnet, daß die Basiseinheiten (1) großflächig in einem Format bis zu 50 cm x 200 cm bei einer Dicke bis zu 5 cm hergestellt werden.

12. Verfahren nach einem der Ansprüche 2 bis 11, **dadurch gekennzeichnet, dass** stets zwei der Basismodule (2) mit Überstand (8) verklebt und zur Verlängerung des Modul-Stranges (4) genutzt werden.

## Claims

1. Method of constructing a wall of a building, wherein basic units (1) are produced from sustainable raw materials, in particular from vegetable fibres such as wood, bamboo, hemp, or the like, a plurality ofwhich basic units (I) are glued together to form a basic module (2) and a plurality of basic modules (2) are manufactured, wherein two of the basic modules (2) are glued so as to yield an overhang (8) and in each case repeatedly a further basic module (2) is glued to the resultant overhang (8) so as to form a module series (4), **characterised in that** sectional modules (6) are furthermore cut from the module series (4) and connected to the framework (7) of the wall.

2. Method according to claim 1, **characterised in that** the basic modules (2) are produced in a first layout pattern and in a second layout pattern and arranged within the module series (4) so as to alternate.

3. Method according to either claim 1 or claim 2, **characterised in that** the basic units (1) are glued at the open butt joints (3) with a slowly hardening glue and that, after glueing, the basic modules (2) thus formed are seasoned to allow hardening.

4. Method according to claim 3, **characterised in that** the seasoning time is calculated in such a way that the basic modules (2) lose their shrinkage behaviour.

5. Method according to any one of claims 1 to 4, **characterised in that**, for producing the module series (4), a rapidly hardening glue is used which hardens within the time taken to transport the module series (4) on a conveyor belt from the glueing station to the cutting station.

6. Method according to claim 5, **characterised in that** an assembly belt is disposed within the vicinity of the conveyor belt, on which assembly belt a frame, in particular of wood materials and/or wood, is conveyed as the framework (7) for the wall, **in that**, with the use of a grabbing device, the sectional module (6) is transferred from the conveyor belt to the assembly belt, and **in that**, on the assembly belt, the sectional module (6) is connected to the frame.

7. Method according to any one of claims I to 6, **characterised in that**, following production of the module series (4), which acts as a first layer or as a carrier, a second layer is applied thereto for the purpose of modifying the mechanical and/or thermal characteristics of the sectional module (6).

8. Method according to any one of claims 1 to 7, **characterised in that** the sectional module (6) is cut out with a cutter head which produces a lateral profiling.

9. Method according to claim 8, **characterised in that** a complementary profiling is produced in the framework (7) and a perfect fit is created between the framework (7) and the sectional module (6).

10. Method according to any one of claims I to 9, **characterised in that** a second skin is positioned in front of the wall formed from the framework (7) and the sectional module (6).

11. Method according to any one of claims 1 to 10, **characterised in that** the basic units (I) are manufactured in a surface-area format of up to 50 cm x 200 cm with a thickness of up to 5 cm.

12. Method according to any one of claims 2 to 11, **characterised in that** two of the basic modules (2) are continually glued so as to yield an overhang (8) and are used to extend the module series (4).

## Revendications

1. Procédé de réalisation d'une paroi d'un bâtiment, dans lequel on réalise des unités de base (1), réalisées en matériaux bruts renouvelables, en particulier en fibres végétales, telles que le bois, le bambou, le chanvre ou similaire, dont une pluralité sont collées les unes aux autres pour former un module de base (2), et on réalise une pluralité de modules de base (2), dans lequel deux des modules de base (2) sont collés avec un débord (8) et sur chaque débord (8) qui se forme est collé de manière répétée un autre module de base (2) pour former un tronçon de modules (4), **caractérisé en ce que**, en outre, des modules formant des pans de mur (6) sont découpés dans le tronçon de modules (4) et sont assemblés à l'ouvrage de support (7) de la paroi.

2. Procédé selon la revendication 1, **caractérisé en ce que** les modules de base (2) sont réalisés selon un premier modèle de pose et selon un deuxième modèle de pose et sont disposés en alternance dans le tronçon de modules (4).

3. Procédé selon la revendication 1 ou 2, **caractérisé en ce que** les unités de base (1) sont collées au niveau des joints (3) avec une colle à durcissement lent, et **en ce que** les modules de base (2) ainsi formés sont stockés après le collage en vue du durcissement.

4. Procédé selon la revendication 3, **caractérisé en ce que** le temps de stockage est choisi de telle sorte que les modules de base (2) perdent leur comportement de contraction.

5. Procédé selon l'une quelconque des revendications 1 à 4, **caractérisé en ce que** pour la réalisation du tronçon de modules (4), on utilise une colle à durcissement rapide, qui durcit pendant le temps de transport du tronçon de modules (4) sur une bande transporteuse depuis le poste de collage jusqu'au poste de découpe.

6. Procédé selon la revendication 5, **caractérisé en ce qu'**à côté de la bande transporteuse est montée une bande de montage, sur laquelle est transporté un cadre, en particulier en matériaux à base de bois et/ou en bois, formant l'ouvrage de support (7) pour la paroi, **en ce que** le module formant un pan de mur (6) est transféré par un dispositif de préhension depuis la bande transporteuse sur la bande de montage, et **en ce que** le module formant un pan de mur (6) est assemblé avec le cadre sur la bande de montage.

7. Procédé selon l'une quelconque des revendications 1 à 6, **caractérisé en ce que**, après la réalisation du tronçon de modules (4), une deuxième couche est déposée sur celui-ci formant une première couche ou formant un support, en vue de modifier les propriétés mécaniques et/ou thermiques du module formant un pan de mur (6).

8. Procédé selon l'une quelconque des revendications 1 à 7, **caractérisé en ce que** le module formant un pan de mur (6) est découpé au moyen d'une tête de fraisage qui génère un profilage latéral.

9. Procédé selon la revendication 8, **caractérisé en ce que** dans l'ouvrage de support (7) est réalisé un profilage complémentaire et un assemblage ajusté est réalisé entre l'ouvrage de support (7) et le module formant un pan de mur (6).

10. Procédé selon l'une quelconque des revendications 1 à 9, **caractérisé en ce qu'**une deuxième coque est posée devant la paroi formée par l'ouvrage de support (7) et le module formant un pan de mur (6).

11. Procédé selon l'une quelconque des revendications 1 à 10, **caractérisé en ce que** les unités de base (1) sont réalisées avec une grande surface dans un format allant jusqu'à 50 cm x 200 cm avec une épaisseur jusqu'à 5 cm.

12. Procédé selon l'une quelconque des revendications 2 à 11, **caractérisé en ce que** toujours deux des modules de base (2) sont collés avec un débord (8) et sont utilisés pour prolonger le tronçon de modules (4).
